(19) Europäisches Patentamt
European Patent Office
Office européen des brevets

(11) **EP 4 164 090 A1**

(12) **EUROPEAN PATENT APPLICATION**

(43) Date of publication:
**12.04.2023 Bulletin 2023/15**

(21) Application number: **21201325.4**

(22) Date of filing: **06.10.2021**

(51) International Patent Classification (IPC):
***H02J 50/60*** *(2016.01)*

(52) Cooperative Patent Classification (CPC):
**H02J 50/60**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB E-mobility B.V.**
**2629 JG Delft (NL)**

(72) Inventors:
• **Blaszczyk, Pawel**
  **32-020 Wieliczka (PL)**
• **Tombelli, Fabio**
  **2291ZJ Wateringen (NL)**

(74) Representative: **Wroblewski, Marcin Jan**
**Fert, Jakubiak vel Wojtczak**
**Wróblewski rzecznicy patentowi**
**Sp. P. / ul. Gdanska 126/A103**
**90-520 Lodz (PL)**

(54) **A METHOD FOR A FOREIGN OBJECT DETECTION IN A CONTACTLESS CHARGING SYSTEM**

(57) A contactless power supply device (10) for a contactless charging system comprising a high frequency generator (11) for generating a high frequency waveform, an oscillation unit (12) with a primary coil (13) for generating an alternating flux and a control unit (14) for controlling operation of the high frequency generator (11). The output of the high frequency generator (11) is connected to the primary coil (13) of the oscillation unit (12) and the output of the control unit (14) is connected to the input of the high frequency generator (11). Furthermore, the contactless power supply device (10) comprises a measuring unit (15) configured to measure instantaneous values $I_{meas}$ of alternating current of the primary coil (13) during a charging state of a contactless charging system, or to measure the RMS values $I_{RMS}$ of alternating current of the primary coil (13) during a charging state of a contactless charging system, or the contactless power supply device (10) comprises a measuring unit (15) configured to measure instantaneous values $I_{meas}$ of alternating current of the primary coil (13) during a charging state of a contactless charging system and the control unit (14) is configured to calculate the RMS values $I_{RMS}$ of the measured instantaneous values $I_{meas}$ of alternating current, or to calculate the change rate $\frac{di}{dt}$ of the measured instantaneous values $I_{meas}$ of alternating current, wherein $di$ - a first degree differential of the measured instantaneous values $I_{meas}$ of alternating current of the primary coil (13), $dt$ - a first degree differential of measurement time of the instantaneous values $I_{meas}$ of alternating current of the primary coil (13), or to calculate a second derivative $\frac{d^2i}{dt^2}$ of the measured instantaneous values $I_{meas}$ of alternating current, wherein $d^2i$ - a second degree differential of the measured instantaneous values $I_{meas}$ of alternating current of the primary coil (13), $dt^2$ - a second degree differential of measurement time of the instantaneous values $I_{meas}$ of alternating current of the primary coil (13), or the control unit (14) is configured to measure instantaneous values $I_{meas}$ of alternating current of the primary coil (13) during a charging state of a contactless charging system, or to measure the RMS values $I_{RMS}$ of alternating current of the primary coil (13) during a charging state of a contactless charging system, or to measure instantaneous values $I_{meas}$ of alternating current of the primary coil (13) during a charging state of a contactless charging system and calculate the RMS values $I_{RMS}$ of the measured instantaneous values $I_{meas}$ of alternating current of the primary coil (13) during a charging state of a contactless charging system, or to measure instantaneous values $I_{meas}$ of alternating current of the primary coil (13) during a charging state of a contactless charging system and calculate the change rate $\frac{di}{dt}$ of the measured instantaneous values $I_{meas}$ of alternating current, wherein $di$ - a first degree differential of the measured instantaneous values $I_{meas}$ of alternating current of the primary coil (13), $dt$ - a first degree differential of measurement time of the instantaneous values $I_{meas}$ of alternating current of the primary coil (13), or to

**(Cont. next page)**

measure instantaneous values $I_{meas}$ of alternating current of the primary coil (13) during a charging state of a contactless charging system and calculate the second

derivative $\dfrac{d^2 i}{dt^2}$ of the measured instantaneous values $I_{meas}$ of alternating current, wherein $d^2 i$ - a second degree differential of the measured instantaneous values $I_{meas}$ of alternating current of the primary coil (13), $dt^2$ - a second degree differential of measurement time of the instantaneous values $I_{meas}$ of alternating current of the primary coil (13), and said contactless power supply device (10) is configured to detect a foreign object between the power supply device (10) and a power receiver device of a contactless charging system such that instantaneous values $I_{meas}$ of alternating current are measured, or the RMS values $I_{RMS}$ of alternating current are measured and/or calculated, or the change rate $\dfrac{di}{dt}$ of the measured instantaneous values $I_{meas}$ of alternating current is calculated, the second derivative $\dfrac{d^2 i}{dt^2}$ of the measured instantaneous values $I_{meas}$ of alternating current is calculated, and the foreign object is detected when the measured instantaneous value $I_{meas}$ of alternating current is equal or greater than a set threshold value $I_{limit}$ of alternating current, or the measured and/or calculated RMS value $I_{RMS}$ of the measured instantaneous value $I_{meas}$ of alternating current is equal or greater than a set threshold value of the RMS value $I_{RMS\ limit}$, or the calcu-

lated change rate $\dfrac{di}{dt}$ of the measured instantaneous value $I_{meas}$ of alternating current is equal or greater than a set threshold value of the change rate $\dfrac{di}{dt}$ limit, or the

calculated second derivative $\dfrac{d^2 i}{dt^2}$ of the measured instantaneous value $I_{meas}$ of alternating current is equal or greater than a set threshold value of the second deriva-

tive $\dfrac{d^2 i}{dt^2}$ limit

Fig. 1

## Description

### *Technical field*

The present invention relates to a contactless power supply device adapted to a foreign object detection and a contactless charging system comprising such a contactless power supply device. Furthermore, the present invention relates to a method for a foreign object detection in such a contactless charging system.

### *Background of the invention*

Dynamic development of wireless charging technology, especially wireless charging systems of electric vehicles, creates the need to develop systems characterized by increased efficiency of operation in relation to the solutions known from the prior art. One of the main reasons leading to decreases in power transmission in such systems is the occurrence of eddy currents being a result of the presence of foreign objects in a magnetic field between a power supply device and a power receiver. Furthermore, said foreign objects may heat up to high temperatures which may be dangerous to system users and lead to their burns. The above-mentioned problems have been solved in a variety of ways as shown by the patent literature cited below.

From American patent application US20130069441A1 there is known a foreign object debris detection system for a wireless energy transfer system comprising at least one magnetic field sensor, and at least one readout circuit for measuring electrical parameters of the at least one magnetic field sensor, wherein the at least one magnetic field sensor is positioned within the magnetic field of the wireless energy transfer system. The at least one magnetic field sensor might be a gradiometer. Moreover, the at least one magnetic field sensor may comprise loops of wire and/or printed conductor traces forming loops, figure-8 loops, and/or structures comprising one loop or multiple loops that generate an electrical signal proportional to the amount of magnetic flux crossing its surface. The at least one readout circuit may measure the voltage and/or the current and/or the relative phase of the voltages and/or currents in the loops. The aim of the proposed solution is to provide a method and system for detecting foreign objects, in particular fast heating metal objects, and mitigating effects of its presence.

From American patent application US20150365138A1 there is known a wireless interference detection device configured to detect interference caused by a foreign object within a magnetic field of a wireless transfer coil during a wireless energy transfer between wireless transfer stations. Furthermore, the wireless interference detection device is configured to monitor an energy load on the wireless transfer coil of a wireless transfer station and adjust the wireless energy transfer. The aim of the disclosed invention is to detect foreign objects and interference caused by their presence within a magnetic field emitted from the magnetic coil in order to reduce energy wastage and safety risks.

US20120038317A1 discloses a wireless charging system comprising a primary device incorporating a power transmitter and a secondary device incorporating a power receiver. The secondary device also includes a sensor adapted to detect any anomaly in the power transmission path between the power transmitter and receiver. The sensor is a temperature sensor adapted to detect a temperature or a rate of temperature rise or a metal detection sensor adapted to detect the presence or absence of a foreign object between the power transmitter and receiver. US20120038317A1 presents a solution to problem of power loss and heating of the foreign object itself.

WO2012004092A2 discloses a device for detecting presence of a foreign object in an inductively coupled power transfer environment. The device comprises a primary unit with a primary coil and a secondary unit with a secondary coil. The secondary unit is adapted to receive power inductively from the primary coil of the primary unit. The device for detecting presence of a foreign object further comprises a sheet of a thermal conductive material adapted to be placed between the primary unit and the secondary unit, at least one temperature sensor to sense a temperature of the sheet, and a control means adapted to control supply of power to the secondary unit based on the temperature of the sheet measured by the at least one temperature sensor. The object of the invention is to provide a simple, accurate and sensitive device for wireless power transfer systems and method for detecting foreign objects placed in an inductively charged environment. Another object of the invention is to prevent power wastage due to presence of foreign objects in the inductively charged environment and avoid risk of creating of an unsafe power transfer environment.

US20140015329A1 discloses a method and an apparatus for detecting foreign objects. The apparatus comprises a resonant circuit with a resonant frequency, wherein the resonant circuit comprises a sense circuit with an electrically conductive structure. The apparatus comprises further a coupling circuit coupled to the sense circuit, and a detection circuit coupled to the sense circuit via the coupling circuit. The detection circuit is configured to detect the presence of a foreign object in response to detecting a difference between a measured characteristic that depends on a frequency at which the resonant circuit is resonating and a corresponding characteristic that depends on the resonant frequency of the resonant circuit. The coupling circuit is configured to reduce a variation of the resonant frequency by the detection circuit in the absence of a foreign object. The aim of the proposed technical solution is to provide an apparatus for use in a wireless charging system and a method allowing efficient and safe transfer of power to electric vehicles.

US20140084857A1 discloses a method and system for detecting metallic or conductive foreign objects influencing on a wireless transfer of power. The system comprises at least one power transmitter coil configured for transmitting power by inductive coupling to a power receiver coil in a separate device and at least one foreign object detection coil located proximate to the power transmitter coil and oriented to detect foreign objects that disturb a power transmission. The object of the invention is to reduce heating of foreign objects which may as a result pose a threat to safety of a user.

US20120313579A1 discloses a contactless power supply device that uses electromagnetic induction to perform power transmission between devices in a contactless manner and a contactless power charging system that includes the contactless power supply device. The mentioned device comprises a primary coil supplied with AC current to generate alternating flux, an input current measurement unit that measures a current value of an input current of the primary coil in a charging state during which the alternating flux generated by the primary coil intersects the secondary coil; and adding a predetermined current value to a reference current value corresponding to a current value of an input current measured by the input current measurement unit in a previous detection cycle.

Although the above-cited patent literature discloses variety of proposals for detecting foreign objects in contactless charging systems, devices for detecting foreign objects and systems comprising such devices could be characterized by faster detection time of said foreign objects resulting in even greater improvement in power transmission and reduced heating times of said foreign objects. Therefore, an object of the invention is to provide a contactless power supply device, system and method for a foreign object detection characterized by faster detection time, thus faster response time, compared to state-of-the-art solutions.

***The Essence of the Invention***

The object of the invention is a contactless power supply device for a contactless charging system comprising a high frequency generator for generating a high frequency waveform, an oscillation unit with a primary coil for generating an alternating flux, a control unit for controlling operation of the high frequency generator, wherein the output of the high frequency generator is connected to the primary coil of the oscillation unit and the output of the control unit is connected to the input of the high frequency generator, and further the contactless power supply device comprises a measuring unit configured to measure instantaneous values $I_{meas}$ of alternating current of the primary coil during a charging state of a contactless charging system, or to measure the RMS values $I_{RMS}$ of alternating current of the primary coil during a charging state of a contactless charging system, or the contactless power supply device further comprises a measuring unit configured to measure instantaneous values $I_{meas}$ of alternating current of the primary coil during a charging state of a contactless charging system and the control unit is configured to calculate the RMS values $I_{RMS}$ of the measured instantaneous values $I_{meas}$ of alternating current, or to calculate the change rate $\frac{di}{dt}$ of the measured instantaneous values $I_{meas}$ of alternating current, wherein $di$ - a first degree differential of the measured instantaneous values $I_{meas}$ of alternating current of the primary coil, $dt$

- a first degree differential of measurement time of the instantaneous values $I_{meas}$ of alternating current of the primary coil, or to calculate a second derivative $\frac{d^2i}{dt^2}$ of the measured instantaneous values $I_{meas}$ of alternating current, wherein $d^2i$ - a second degree differential of the measured instantaneous values $I_{meas}$ of alternating current of the primary coil, $dt^2$ - a second degree differential of measurement time of the instantaneous values $I_{meas}$ of alternating current of the primary coil, or the control unit is configured to measure instantaneous values $I_{meas}$ of alternating current of the primary coil during a charging state of a contactless charging system, or to measure the RMS values $I_{RMS}$ of alternating current of the primary coil during a charging state of a contactless charging system, or to measure instantaneous values $I_{meas}$ of alternating current of the primary coil during a charging state of a contactless charging system and calculate the RMS values $I_{RMS}$ of the measured instantaneous values $I_{meas}$ of alternating current of the primary coil during a charging state of a contactless charging system, or to measure instantaneous values $I_{meas}$ of alternating current of the primary coil during a charging state of a contactless charging system and calculate the change rate $\frac{di}{dt}$ of the measured instantaneous values $I_{meas}$ of alternating current, wherein $di$ - a first degree differential of the measured instantaneous values $I_{meas}$ of alternating current of the primary coil, $dt$

- a first degree differential of measurement time of the instantaneous values $I_{meas}$ of alternating current of the primary coil, or to measure instantaneous values $I_{meas}$ of alternating current of the primary coil during a charging state of a contactless charging system and calculate the second derivative $\frac{d^2i}{dt^2}$ of the measured instantaneous values $I_{meas}$ of alternating current, wherein $d^2i$ - a second degree differential of the measured instantaneous values $I_{meas}$ of alter-

nating current of the primary coil, $dt^2$ - a second degree differential of measurement time of the instantaneous values $I_{meas}$ of alternating current of the primary coil, and said contactless power supply device is configured to detect a foreign object between the power supply device and a power receiver device of a contactless charging system such that instantaneous values $I_{meas}$ of alternating current are measured, or the RMS values $I_{RMS}$ of alternating current are measured and/or calculated, or the change rate $\frac{di}{dt}$ of the measured instantaneous values $I_{meas}$ of alternating current is calculated, the second derivative $\frac{d^2i}{dt^2}$ of the measured instantaneous values $I_{meas}$ of alternating current is calculated, and the foreign object is detected when the measured instantaneous value $I_{meas}$ of alternating current is equal or greater than a set threshold value $I_{limit}$ of alternating current, or the measured and/or calculated RMS value $I_{RMS}$ of the measured instantaneous value $I_{meas}$ of alternating current is equal or greater than a set threshold value of the RMS value $I_{RMS\ limit}$, or the calculated change rate $\frac{di}{dt}$ of the measured instantaneous value $I_{meas}$ of alternating current is equal or greater than a set threshold value of the change rate $\frac{di}{dt}\ limit$ or the calculated second derivative $\frac{d^2i}{dt^2}$, of the measured instantaneous value $I_{meas}$ of alternating current is equal or greater than a set threshold value of the second derivative $\frac{d^2i}{dt^2}\ limit$.

The disclosed contactless power supply device according to the invention provides accelerated time of detection of a foreign object in a contactless charging system, and thereby acceleration of its response time and response time of a contactless charging system comprising such device. As a result, it leads to improvement in power transmission and reduction of heating times of foreign objects in the contactless charging system. Further, the reduction of heating times ensures an appropriate level of safety of system users.

Preferably, the contactless power supply device comprises a low-pass filter for filtering measured instantaneous values $I_{meas}$ of alternating current of the primary coil.

The application of the low-pass filter allows suppression of higher harmonics of the measured alternating current instantaneous values $I_{meas}$, which reduces number of false triggers.

Furthermore, the object of the invention is a contactless charging system comprising the contactless power supply device and a contactless power receiver.

Preferably, the contactless power receiver of the contactless charging system comprises an oscillation unit with a secondary coil for receiving an alternating flux generated by the contactless power supply device and a load for storing electric energy.

Preferably, the contactless charging system further comprises a control module for controlling operation of the contactless power supply device.

The object of the invention is also a method for a foreign object detection in the contactless charging system comprising the following steps measuring instantaneous values $I_{meas}$ of alternating current of the primary coil of the contactless power supply device during a charging state of the contactless charging system, or measuring the RMS values $I_{RMS}$ of alternating current of the primary coil of the contactless power supply device during a charging state of the contactless charging system, or measuring instantaneous values $I_{meas}$ of alternating current of the primary coil during a charging state of the contactless charging system and calculating the RMS values $I_{RMS}$ of the measured instantaneous values $I_{meas}$ of alternating current, or measuring instantaneous values of alternating current $I_{meas}$ of the primary coil during a charging state of the contactless charging system and calculating the change rate $\frac{di}{dt}$ of the measured instantaneous values $I_{meas}$ of alternating current, wherein $di$ - a first degree differential of the measured instantaneous values $I_{meas}$ of alternating current of the primary coil, $dt$ - a first degree differential of measurement time of the instantaneous values $I_{meas}$ of alternating current of the primary coil, or measuring instantaneous values $I_{meas}$ of alternating current of the primary coil during a charging state of the contactless charging system and calculating a second derivative $\frac{d^2i}{dt^2}$ of the measured instantaneous values $I_{meas}$ of alternating current, wherein $d^2i$ - a second degree differential of the measured instantaneous values $I_{meas}$ of alternating current of the primary coil, $dt^2$ - a second degree differential of measurement time of the instantaneous values $I_{meas}$ of alternating current of the primary coil, and comparing the measured instantaneous values $I_{meas}$ of alternating current with a set threshold $I_{limit}$ of alternating current, or comparing the measured and/or the calculated RMS values $I_{RMS}$ of the measured instantaneous value $I_{meas}$ of alternating current with a set threshold of the RMS value $I_{RMS\ limit}$, or comparing the calculated change rate $\frac{di}{dt}$ of the meas-

ured instantaneous value $I_{meas}$ of alternating current with a set threshold of the change rate $\frac{di}{dt} limit$, or comparing the calculated second derivative $\frac{d^2i}{dt^2}$ of the measured instantaneous value $I_{meas}$ of alternating current $I_{meas}$ with a set threshold of the second derivative $\frac{d^2i}{dt^2} limit$, and detecting a foreign object between the power supply device and the power receiver device of the contactless charging system when the measured instantaneous value $I_{meas}$ of alternating current is equal or greater than a set threshold value $I_{limit}$ of alternating current, or the measured and/or calculated RMS value $I_{RMS}$ of the measured instantaneous value $I_{meas}$ of alternating current is equal or greater than a set threshold value of the RMS value $I_{RMS\ limit}$, or the calculated change rate $\frac{di}{dt}$ of the measured instantaneous value $I_{meas}$ of alternating current is equal or greater than a set threshold value of the change rate $\frac{di}{dt} limit$, or the calculated second derivative $\frac{d^2i}{dt^2}$ of the measured instantaneous value $I_{meas}$ of alternating current is equal or greater than a set threshold value of the second derivative $\frac{d^2i}{dt^2} limit$.

The method according to the invention provides accelerated time of detection of a foreign object in a contactless charging system, and thereby acceleration of response time of a contactless power supply device and a contactless charging system comprising such device. As a result, it leads to improvement in power transmission and reduction of heating times of foreign objects in the contactless charging system. Further, the reduction of heating times ensures an appropriate level of safety of system users.

The method according to invention thanks to measuring and/or calculating of the RMS value $I_{RMS}$ of measured instantaneous value of alternating current of a primary coil of a contactless power supply device is more reliable than methods known from the prior art.

The method according to invention thanks to calculating of the second derivative of measured instantaneous value of alternating current of a primary coil of a contactless power supply device is applicable to high power applications or hazardous environments.

Preferably, the method comprises further the steps of notifying the controlling module for controlling operation of the contactless power supply device of a foreign object detection, and/or switching off the contactless power supply device, or frequency modulation of a high frequency waveform generated by the high frequency generator.

Preferably, after the step of measuring instantaneous values $I_{meas}$ of alternating current of the primary coil the method comprises the step of filtering of the measured instantaneous values $I_{meas}$ of alternating current.

The step of filtering of the measured instantaneous value of the alternating current $I_{meas}$ allows suppression of higher harmonics of the measured instantaneous values $I_{meas}$ of alternating current and as a result leads to reducing number of false triggers.

The invention further relates to a computer program comprising means of the program code for performing all steps of a computer-implemented method according to the invention, when the said program is running on a computer.

The invention also relates to a computer-readable medium storing computer-implemented instructions for performing all the steps of method according to the invention, wherein such method is implemented on a computer.

### Advantages of the invention

The method and the contactless power supply device according to the invention ensure detection of foreign objects occurring in a magnetic field between the power supply device and a contactless power receiver of a contactless charging system which is faster than those known in the prior art.

Furthermore, the method and the contactless power supply device according to the invention ensures an appropriate level of safety of system users.

The method according to invention thanks to measuring and/or calculating of the RMS value $I_{RMS}$ of measured instantaneous $I_{meas}$ value of alternating current of a primary coil of a contactless power supply device is more reliable than methods known from the prior art.

The method according to invention thanks to calculating of the second derivative $\frac{d^2i}{dt^2}$ of measured instantaneous value $I_{meas}$ of alternating current of a primary coil of a contactless power supply device is applicable to high power applications or hazardous environments.

The application of the low-pass filter allows suppression of higher harmonics of the measured instantaneous values $I_{meas}$ of alternating current, which reduces number of false triggers.

### Description of the drawings

The subject of the invention is shown in the embodiments in a drawing, in which:

Fig.1 presents schematically a contactless charging system according to embodiments one to five of the invention;

Fig.2 presents schematically a sixth embodiment of a contactless charging system according to the invention;

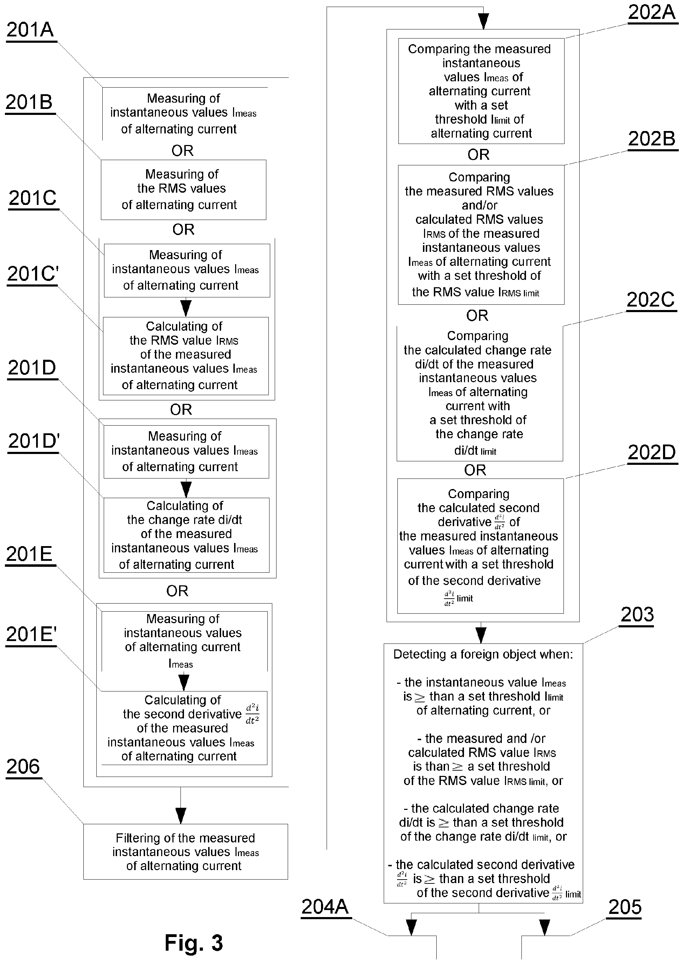

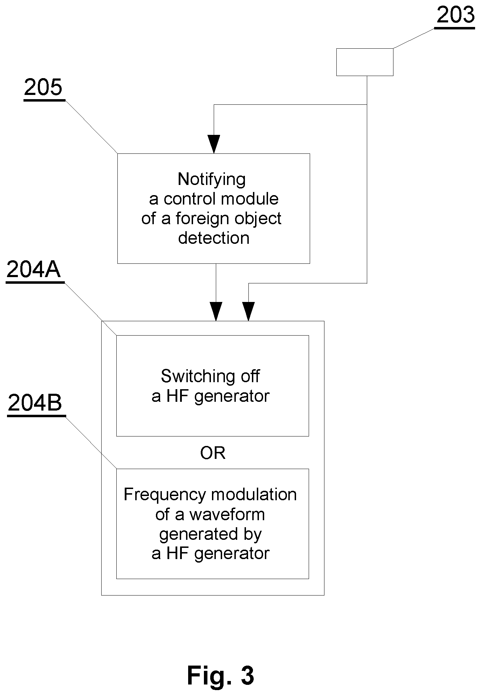

Fig.3 presents a flowchart of a method for a foreign object detection according to the invention;

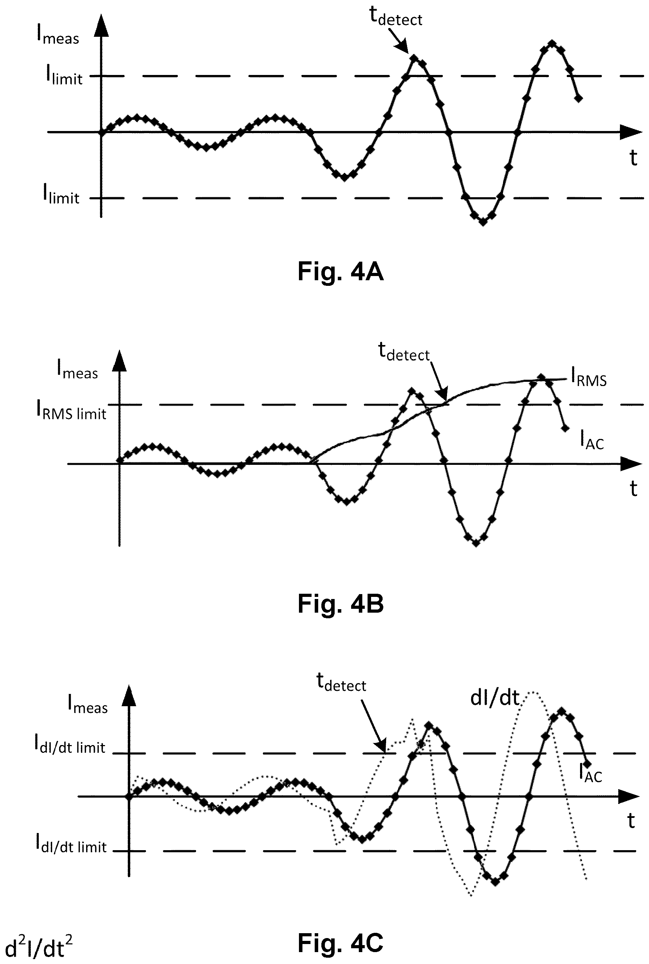

Fig.4A presents an example time waveform of a measured AC current of a primary coil of a contactless power supply device with indicated detection time of a foreign object;

Fig.4B presents an example time waveform of a measured AC current of a primary coil of a contactless power supply device with its RMS values and indicated detection time of a foreign object;

Fig.4C presents an example time waveform of a measured AC current of a primary coil of a contactless power supply device with its change rate and indicated detection time of a foreign object;

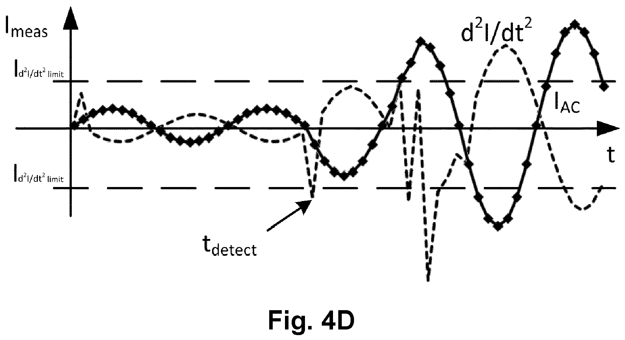

Fig.4D presents an example time waveform of a measured AC current of a primary coil of a contactless power supply device with its second derivative and indicated detection time of a foreign object.

*Detailed* description of the invention

*The first embodiment of the invention*

*A contactless power supply device*

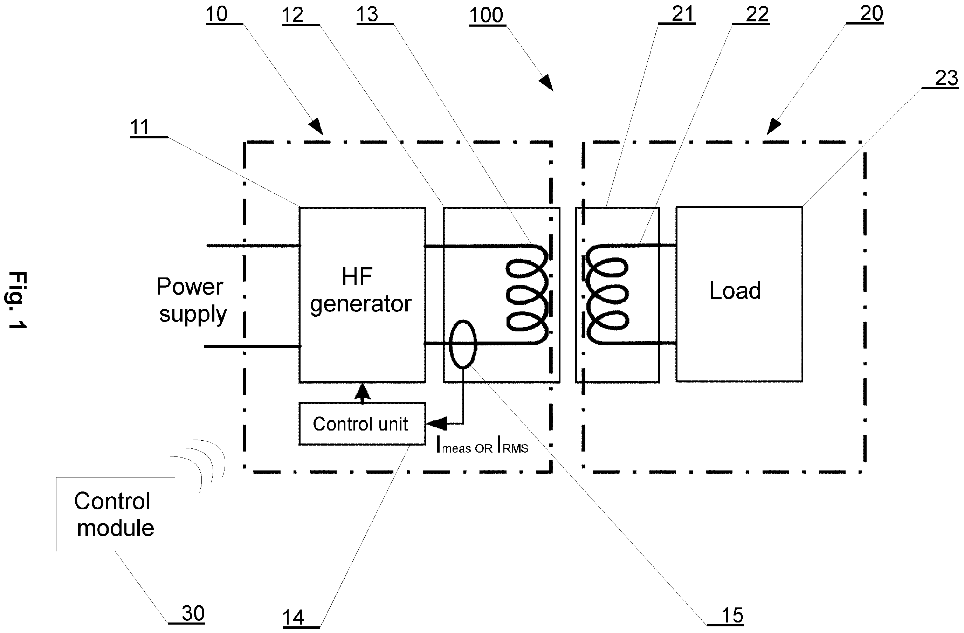

A contactless power supply device 10 (Fig. 1) for contactless charging system comprising a high frequency generator 11 for generating a high frequency waveform, an oscillation unit 12 with a primary coil 13 for generating an alternating flux and a control unit 14 for controlling operation of the high frequency generator 11. The control unit 14 can be configured to switch off the high frequency generator 11 or to perform frequency modulation of a waveform generated by the high frequency generator 11. The output of the high frequency generator 11 is connected to the primary coil 13 of the oscillation unit 12 and the output of the control unit 14 is connected to the input of the high frequency generator 11. The contactless power supply device 10 comprises further a measuring unit 15 configured to measure instantaneous values $I_{meas}$ of alternating current of the primary coil 13 during a charging state of a contactless charging system. The measuring unit 15 can be configured to measure instantaneous values $I_{meas}$ and the RMS values

$I_{RMS}$ of alternating current of the primary coil 13 during a charging state of a contactless charging system.

In the other embodiments, the measurement of the instantaneous values $I_{meas}$ of alternating current of the primary coil 13 might be done by the control unit 14 without implementation of the measuring unit 15.

Furthermore, the contactless power supply device 10 is configured to detect a foreign object between the power supply device 10 and a power receiver device of a contactless charging system such that instantaneous values $I_{meas}$ of alternating current are measured and the foreign object is detected when the measured instantaneous value $I_{meas}$ of alternating current is equal or greater than a set threshold value $I_{limit}$ of alternating current.

The disclosed contactless power supply device 10 provides accelerated time of detection of a foreign object in a contactless charging system, and thereby acceleration of its response time and response time of a contactless charging system comprising such device. As a result, it leads to improvement in power transmission and reduction of heating times of foreign objects in the contactless charging system. Further, the reduction of heating times ensures an appropriate level of safety of system users.

*A contactless charging system*

A contactless charging system 100 comprises said contactless power supply device 10 and a contactless power receiver 20. The contactless power receiver 20 comprises an oscillation unit 21 with a secondary coil 22 for receiving an alternating flux generated by the contactless power supply device 10 and a load 23 for storing electric energy. Furthermore, the contactless charging system 100 comprises a control module 30 for controlling operation of the contactless power supply device 10. The control module 30 can communicate with the contactless power supply device 10 wirelessly. The control unit 14 of the contactless power supply device 10 can be configured to notify the control module 30 about detection of a foreign object and the control module 30 can be configured to notify a user of the contactless charging system 100 about such detection. Furthermore, the control module 30 can be configured to perform frequency modulation of a waveform generated by the high frequency generator 11 or to switch off the high frequency generator 11 upon receipt of the notification from the control unit 14.

The system disclosed in the indicated embodiment provides a disclosure that is also inherent in the other embodiments.

*A method for a foreign object detection in a contactless charging system*

In the method according to the first embodiment of the invention in the first step an instantaneous value $I_{meas}$ of alternating current of the primary coil 13 of the contactless power supply device 10 is measured 201A by the measuring unit 15 during a charging state of the contactless charging system 100.

In the other embodiments, the measurement of the instantaneous values $I_{meas}$ of alternating current of the primary coil 13 might be done by the control unit 14 without implementation of the measuring unit 15.

Next, the instantaneous value $I_{meas}$ of the measured alternating current is compared 202 by the contactless power supply device 10 with a set threshold of alternating current $I_{limit}$. In the further step, a foreign object between the power supply device 10 and the power receiver device 20 of the contactless charging system 100 is detected 203 by the contactless power supply device 10 provided that the measured instantaneous value $I_{meas}$ of alternating is equal or greater than a set threshold value of alternating current $I_{limit}$. In the next step he high frequency generator can be switched off 204A or a high frequency waveform generated by the high frequency generator 11 can be frequency modulated 204B. As it was mentioned before the last two steps (204A, 204B) might be performed by the control unit 14 independently or by the control module 30 involving the control unit 14. In case of switching off and/or frequency modulation performed by the control module 30 it must to be notified 205 beforehand of a foreign object detection by the control unit 14.

The disclosed method provides accelerated time of detection of a foreign object in the contactless charging system 100, and thereby acceleration of response time of the contactless power supply device 10 and the contactless charging system 100 comprising such device. As a result, it leads to improvement in power transmission and reduction of heating times of foreign objects in the contactless charging system 100. Further, the reduction of heating times ensures an appropriate level of safety of system users.

### A computer program

A computer program comprising means of the program code for performing all steps of a computer-implemented method according to the invention, when the said program is running on a computer.

The computer program disclosed in the indicated embodiment provides a disclosure that is also inherent in the other embodiments.

### A computer-readable medium

A computer-readable medium storing computer-implemented instructions for performing all the steps of the method according to the invention, wherein such method is implemented on a computer.

The computer-readable medium disclosed in the indicated embodiment provides a disclosure that is also inherent in the other embodiments.

### *The second embodiment of the invention*

### A contactless power supply device

The second embodiment of the contactless power supply device 10 is as in the first embodiment, with the difference that the measuring unit 15 is configured to measure the RMS values $I_{RMS}$ of alternating current of the primary coil 13 during a charging state of the contactless charging system 100.

In the other embodiments, the measurement of the RMS values $I_{RMS}$ of alternating current of the primary coil 13 might be done by the control unit 14 without implementation of the measuring unit 15.

Furthermore, the contactless power supply device 10 is configured to detect a foreign object between the power supply device 10 and a power receiver device of a contactless charging system such that the RMS values $I_{RMS}$ of alternating current are measured and the foreign object is detected when the measured RMS value $I_{RMS}$ of alternating current is equal or greater than a set threshold value of the RMS value $I_{RMS\ limit}$.

### A method for a foreign object detection in a contactless charging system

In the method according to the second embodiment of the invention in the first step the RMS value $I_{RMS}$ of alternating current of the primary coil 13 is measured 201B by the measuring unit 15 during a charging state of the contactless charging system 100.

In the other embodiments, the measurement of the RMS values $I_{RMS}$ of alternating current of the primary coil 13 might be done by the control unit 14 without implementation of the measuring unit 15.

Further, the measured RMS value $I_{RMS}$ is compared 202 by the contactless power supply device 10 with a set threshold of the RMS value $I_{RMS\ limit}$. In the further step, a foreign object between the power supply device 10 and the power receiver device 20 of the contactless charging system 100 is detected 203 by the contactless power supply device 10 provided that the measured RMS value $I_{RMS}$ of alternating current is equal or greater than a set threshold value of the RMS value $I_{RMS\ limit}$. In the next step he high frequency generator can be switched off 204A or a high frequency waveform generated by the high frequency generator 11 can be frequency modulated 204B. As it was mentioned before the last two steps (204A, 204B) might be performed by the control unit 14 independently or by the control module 30 involving the control unit 14. In case of switching off and/or frequency modulation performed by the control module 30 it must to be notified 205 beforehand of a foreign object detection by the control unit 14.

The method according to invention thanks usage of the RMS value of alternating current of the primary coil 13 of the contactless power supply device 10 is more reliable than methods known from the prior art.

*The third embodiment of the invention*

**A contactless power supply device**

The third embodiment of the contactless power supply device 10 is as in the first embodiment, with the difference that the control unit 14 is configured to calculate the RMS values $I_{RMS}$ of the measured instantaneous values $I_{meas}$ of alternating current and the contactless power supply device 10 is configured to detect a foreign object between the power supply device 10 and a power receiver device of the contactless charging system such that the RMS values $I_{RMS}$ of the instantaneous values $I_{meas}$ of alternating current are calculated and the foreign object is detected when the calculated RMS value $I_{RMS}$ of alternating current is equal or greater than a set threshold value of the RMS value $I_{RMS\ limit}$.

**A method for a foreign object detection in a contactless charging system**

In the method according to the third embodiment of the invention in the first step an instantaneous value $I_{meas}$ of alternating current of the primary coil 13 is measured 201C by the measuring unit 15 during a charging state of the contactless charging system 100.

In the other embodiments, the measurement of the instantaneous values $I_{meas}$ of alternating current of the primary coil 13 might be done by the control unit 14 without implementation of the measuring unit 15.

Next the RMS value $I_{RMS}$ of the measured instantaneous value $I_{meas}$ of alternating current is calculated 201C' by the control unit 14. Further, the calculated RMS value $I_{RMS}$ is compared 202 by the contactless power supply device 10 with a set threshold of the RMS value $I_{RMS\ limit}$. In the further step, a foreign object between the power supply device 10 and the power receiver device 20 of the contactless charging system 100 is detected 203 provided that the calculated RMS value $I_{RMS}$ of the measured instantaneous value $I_{meas}$ of alternating current is equal or greater than a set threshold value of the RMS value $I_{RMS\ limit}$. In the next step he high frequency generator can be switched off 204A or a high frequency waveform generated by the high frequency generator 11 can be frequency modulated 204B. As it was mentioned before the last two steps (204A, 204B) might be performed by the control unit 14 independently or by the control module 30 involving the control unit 14. In case of switching off and/or frequency modulation performed by the control module 30 it must to be notified 205 beforehand of a foreign object detection by the control unit 14.

The method according to invention thanks usage of the RMS value of alternating current of the primary coil 13 of the contactless power supply device 10 is more reliable than methods known from the prior art.

*The fourth embodiment of the invention*

**A contactless power supply device**

The fourth embodiment of the contactless power supply device 10 is as in the first embodiment, with the difference that the control unit 14 is configured to calculate the change rate $\dfrac{di}{dt}$ of the measured alternating current $I_{meas}$, wherein

di - a first degree differential of the measured instantaneous values $I_{meas}$ of alternating current of the primary coil (13), and

dt - a first degree differential of measurement time of the instantaneous values $I_{meas}$ of alternating current of the primary coil 13,

and the contactless power supply device 10 is configured to detect a foreign object between the power supply device 10 and a power receiver device of a contactless charging system such that the change rate $\dfrac{di}{dt}$ of the measured instantaneous values $I_{meas}$ of alternating current is calculated and the foreign object is detected when the calculated change rate $\dfrac{di}{dt}$ of the measured instantaneous values $I_{meas}$ of alternating current is equal or greater than a set threshold value of the change rate $\dfrac{di}{dt}\ limit$.

**A method for a foreign object detection in a contactless charging system**

In the method according to the fourth embodiment of the invention in the first step an instantaneous value $I_{meas}$ of alternating current of the primary coil 13 is measured 201D by the measuring unit 15 during a charging state of the contactless charging system 100.

In the other embodiments, the measurement of the instantaneous values $I_{meas}$ of alternating current of the primary coil 13 might be done by the control unit 14 without implementation of the measuring unit 15.

Next the change rate $\dfrac{di}{dt}$ of the measured instantaneous value $I_{meas}$ of alternating current is calculated 201D' by the control unit 14. Further, the calculated change rate $\dfrac{di}{dt}$ is compared 202 by the contactless power supply device 10 with a set threshold value of the change rate $\frac{di}{dt}$ $limit$ . In the further step, a foreign object between the power supply device 10 and the power receiver device 20 of the contactless charging system 100 is detected 203 provided that the calculated change rate $\frac{di}{dt}$ of the measured instantaneous value $I_{meas}$ of alternating current is equal or greater than a set threshold value of the change rate $\frac{di}{dt}$ $limit$ . In the next step he high frequency generator can be switched off 204A or a high frequency waveform generated by the high frequency generator 11 can be frequency modulated 204B. As it was mentioned before the last two steps (204A, 204B) might be performed by the control unit 14 independently or by the control module 30 involving the control unit 14. In case of switching off and/or frequency modulation performed by the control module 30 it must to be notified 205 beforehand of a foreign object detection by the control unit 14.

### The fifth embodiment of the invention

### A contactless power supply device

The fifth embodiment of the contactless power supply device 10 is as in the first embodiment, with the difference that the control unit 14 is configured to calculate the second derivative $\frac{d^2i}{dt^2}$ of the measured alternating current $I_{meas}$, wherein

$d^2i$ - a second degree differential of the measured instantaneous values $I_{meas}$ of alternating current of the primary coil (13), and

$dt^2$ - a second degree differential of measurement time of the instantaneous values $I_{meas}$ of alternating current of the primary coil 13,

and the contactless power supply device 10 is configured to detect a foreign object between the power supply device 10 and a power receiver device of a contactless charging system such that the second derivative $\frac{d^2i}{dt^2}$ of the measured instantaneous values $I_{meas}$ of alternating current is calculated and the foreign object is detected when the calculated the second derivative $\frac{d^2i}{dt^2}$ of the measured instantaneous values $I_{meas}$ of alternating current is equal or greater than a set threshold value of the change rate $\frac{d^2i}{dt^2}$ $limit$ . The disclosed contactless power supply device is applicable to high power applications or hazardous environments.

### A method for a foreign object detection in a contactless charging system

In the method according to the fifth embodiment of the invention in the first step an instantaneous value $I_{meas}$ of alternating current of the primary coil 13 is measured 201E by the measuring unit 15 during a charging state of the contactless charging system 100.

In the other embodiments, the measurement of the instantaneous values $I_{meas}$ of alternating current of the primary coil 13 might be done by the control unit 14 without implementation of the measuring unit 15.

Next the second derivative $\frac{d^2i}{dt^2}$ of the measured instantaneous value $I_{meas}$ of alternating current is calculated 201D' by the control unit 14. Further, the calculated second derivative $\frac{d^2i}{dt^2}$ is compared 202 by the contactless power supply device 10 with a set threshold value of the second derivative $\frac{d^2i}{dt^2}$ $limit$ . In the further step, a foreign object between the power supply device 10 and the power receiver device 20 of the contactless charging system 100 is detected 203 provided that the calculated second derivative $\frac{d^2i}{dt^2}$ of the measured instantaneous value $I_{meas}$ of alternating current is equal or greater than a set threshold value of the second derivative $\frac{d^2i}{dt^2}$ $limit$ . In the next step he high frequency generator can be switched off 204A or a high frequency waveform generated by the high frequency generator 11 can be frequency modulated 204B. As it was mentioned before the last two steps (204A, 204B) might be performed by the control unit 14 independently or by the control module 30 involving the control unit 14. In case of switching off and/or frequency modulation performed by the control module 30 it must to be notified 205 beforehand of a foreign object detection by the control unit 14.

### The sixth embodiment of the invention

### A contactless power supply device

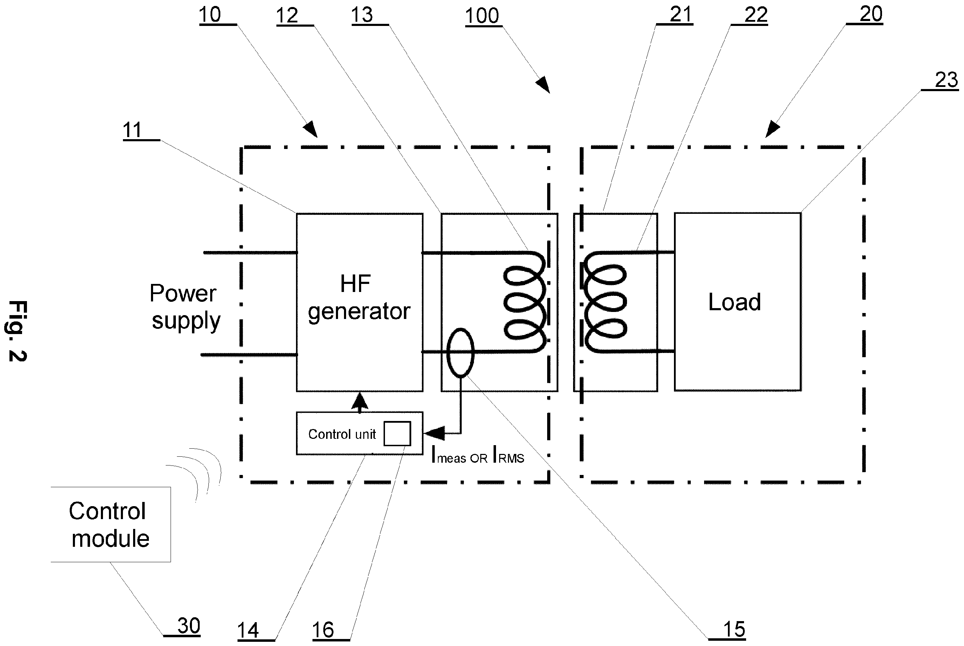

The six embodiment of the contactless power supply device 10 (Fig. 2) is as in the first, third, fourth or fifth embodiment, with the difference that the contactless power supply device 10 further comprises a low-pass filter 16 for filtering a measured instantaneous value $I_{meas}$ of alternating current. The low-pass filter 16 is a part of the control unit 14.

The application of the low-pass filter 15 allows suppression of higher harmonics of the measured instantaneous values $I_{meas}$ of alternating current, which reduces number of false triggers.

## A method for a foreign object detection in a contactless charging system

The method according to the sixth embodiment of the invention is as in the first, third, fourth or fifth embodiment, with the difference that after the step of measuring (201A, 201C, 201D, 201E) instantaneous values $I_{meas}$ of alternating current of the primary coil (13) it comprises further the step of filtering (206) of the measured instantaneous values $I_{meas}$ of alternating current.

The step of filtering of the measured instantaneous value of the alternating current $I_{meas}$ allows suppression of higher harmonics of the measured instantaneous values $I_{meas}$ of alternating current and as a result leads to reducing number of false triggers.

## Claims

1.  A contactless power supply device (10) for a contactless charging system comprising:

    - a high frequency generator (11) for generating a high frequency waveform,
    - an oscillation unit (12) with a primary coil (13) for generating an alternating flux,
    - a control unit (14) for controlling operation of the high frequency generator (11),
    wherein the output of the high frequency generator (11) is connected to the primary coil (13) of the oscillation unit (12) and the output of the control unit (14) is connected to the input of the high frequency generator (11),

    **characterized in that**,
    the contactless power supply device (10) further comprises a measuring unit (15) configured to:

    - measure instantaneous values $I_{meas}$ of alternating current of the primary coil (13) during a charging state of a contactless charging system, and/or to
    - measure the RMS values $I_{RMS}$ of alternating current of the primary coil (13) during a charging state of a contactless charging system,

    or the contactless power supply device (10) further comprises a measuring unit (15) configured to measure instantaneous values $I_{meas}$ of alternating current of the primary coil (13) during a charging state of a contactless charging system and the control unit (14) is configured to:

    - calculate the RMS values $I_{RMS}$ of the measured instantaneous values $I_{meas}$ of alternating current, or to
    - calculate the change rate $\frac{di}{dt}$ of the measured instantaneous values $I_{meas}$ of alternating current, wherein

        $di$ - a first degree differential of the measured instantaneous values $I_{meas}$ of alternating current of the primary coil (13),
        $dt$ - a first degree differential of measurement time of the instantaneous values $I_{meas}$ of alternating current of the primary coil (13), or to

    - calculate a second derivative $\frac{d^2 i}{dt^2}$ of the measured instantaneous values $I_{meas}$ of alternating current, wherein

        $d^2 i$ - a second degree differential of the measured instantaneous values $I_{meas}$ of alternating current of the primary coil (13),
        $dt^2$ - a second degree differential of measurement time of the instantaneous values $I_{meas}$ of alternating current of the primary coil (13),

    or the control unit (14) is configured to:

    - measure instantaneous values $I_{meas}$ of alternating current of the primary coil (13) during a charging state of a contactless charging system, or to
    - measure the RMS values $I_{RMS}$ of alternating current of the primary coil (13) during a charging state of a contactless charging system, or to
    - measure instantaneous values $I_{meas}$ of alternating current of the primary coil (13) during a charging state of a contactless charging system and calculate the RMS values $I_{RMS}$ of the measured instantaneous values $I_{meas}$ of alternating current of the primary coil (13) during a charging state of a contactless charging system, or to
    - measure instantaneous values $I_{meas}$ of alternating current of the primary coil (13) during a charging state of a contactless charging system and calculate the change rate $\frac{di}{dt}$ of the measured instantaneous values $I_{meas}$ of alternating current, wherein

        $di$ - a first degree differential of the measured instantaneous values $I_{meas}$ of alternating current of the primary coil (13),
        $dt$ - a first degree differential of measurement time of the instantaneous values $I_{meas}$ of alternating current of the primary coil (13), or to

- measure instantaneous values $I_{meas}$ of alternating current of the primary coil (13) during a charging state of a contactless charging system and calculate the second derivative $\frac{d^2i}{dt^2}$ of the measured instantaneous values $I_{meas}$ of alternating current, wherein

$d^2i$ - a second degree differential of the measured instantaneous values $I_{meas}$ of alternating current of the primary coil (13), $dt^2$ - a second degree differential of measurement time of the instantaneous values $I_{meas}$ of alternating current of the primary coil (13),

and said contactless power supply device (10) is configured to detect a foreign object between the power supply device (10) and a power receiver device of a contactless charging system such that:

- instantaneous values $I_{meas}$ of alternating current are measured, or
- the RMS values $I_{RMS}$ of alternating current are measured and/or calculated, or
- the change rate $\frac{di}{dt}$ of the measured instantaneous values $I_{meas}$ of alternating current is calculated,
- the second derivative $\frac{d^2i}{dt^2}$ of the measured instantaneous values $I_{meas}$ of alternating current is calculated,

and the foreign object is detected when

- the measured instantaneous value $I_{meas}$ of alternating current is equal or greater than a set threshold value $I_{limit}$ of alternating current, or
- the measured and/or calculated RMS value $I_{RMS}$ of the measured instantaneous value $I_{meas}$ of alternating current is equal or greater than a set threshold value of the RMS value $I_{RMS\ limit}$, or
- the calculated change rate $\frac{di}{dt}$ of the measured instantaneous value $I_{meas}$ of alternating current is equal or greater than a set threshold value of the change rate $\frac{di}{dt} limit$, or

- the calculated second derivative $\frac{d^2i}{dt^2}$ of the measured instantaneous value $I_{meas}$ of alternating current is equal or greater than a set threshold old value of the second derivative $\frac{d^2i}{dt^2} limit$.

2. The contactless power supply device according to claim 1, **characterized in that**, it comprises a low-pass filter (16) for filtering measured instantaneous values $I_{meas}$ of alternating current of the primary coil (13).

3. A contactless charging system (100) comprising the contactless power supply device (10) according to any of the preceding claims and a contactless power receiver (20).

4. The contactless charging system according to claim 3, **characterized in that**, the contactless power receiver (20) comprises an oscillation unit (21) with a secondary coil (22) for receiving an alternating flux generated by the contactless power supply device (10) and a load (23) for storing electric energy.

5. The contactless charging system according to claim 3 or 4, **characterized in that**, it further comprises a control module (30) for controlling operation of the contactless power supply device (10).

6. A method for a foreign object detection in the contactless charging system according to any of claims from 3 to 5 comprising the following steps:

- measuring (201A) instantaneous values $I_{meas}$ of alternating current of the primary coil (13) of the contactless power supply device (10) during a charging state of the contactless charging system (100), or
- measuring (201B) the RMS values $I_{RMS}$ of alternating current of the primary coil (13) of the contactless power supply device (10) during a charging state of the contactless charging system (100), or
- measuring (201C) instantaneous values $I_{meas}$ of alternating current of the primary coil (13) during a charging state of the contactless charging system (100) and calculating (201C') the RMS values $I_{RMS}$ of the measured instantaneous values $I_{meas}$ of alternating current, or
- measuring (201D) instantaneous values of alternating current $I_{meas}$ of the primary coil (13) during a charging state of the contactless charging system (100) and calculating (201D') the change rate $\frac{di}{dt}$ of the measured instantaneous values $I_{meas}$ of alternating current, wherein

$di$ - a first degree differential of the measured instantaneous values $I_{meas}$ of alternating current of the primary coil (13),

$dt$ - a first degree differential of measurement time of the instantaneous values $I_{meas}$ of alternating current of the primary coil (13), or

- measuring (201E) instantaneous values $I_{meas}$ of alternating current of the primary coil (13) during a charging state of the contactless charging system (100) and calculating (201E') a second derivative $\frac{d^2 i}{dt^2}$ of the measured instantaneous values $I_{meas}$ of alternating current, wherein

$d^2i$ - a second degree differential of the measured instantaneous values $I_{meas}$ of alternating current of the primary coil (13),

$dt^2$ - a second degree differential of measurement time of the instantaneous values $I_{meas}$ of alternating current of the primary coil (13),

and
- comparing (202A) the measured instantaneous values $I_{meas}$ of alternating current with a set threshold $I_{limit}$ of alternating current, or
- comparing (202B) the measured and/or the calculated RMS values $I_{RMS}$ of the measured instantaneous value $I_{meas}$ of alternating current with a set threshold of the RMS value $I_{RMS\ limit}$, or
- comparing (202C) the calculated change rate $\frac{di}{dt}$ of the measured instantaneous value $I_{meas}$ of alternating current with a set threshold of the change rate $\frac{di}{dt}\ limit$, or
- comparing (202D) the calculated second derivative $\frac{d^2 i}{dt^2}$ of the measured instantaneous value $I_{meas}$ of alternating current $I_{meas}$ with a set threshold of the second derivative $\frac{d^2 i}{dt^2}\ limit$,

and

- detecting (203) a foreign object between the power supply device (10) and the power receiver device (20) of the contactless charging system (100) when:

- the measured instantaneous value $I_{meas}$ of alternating current is equal or greater than a set threshold value $I_{limit}$ of alternating current, or
- the measured and/or calculated RMS value $I_{RMS}$ of the measured instantaneous value $I_{meas}$ of alternating current is equal or greater than a set threshold value of the RMS value $I_{RMS\ limit}$, or
- the calculated change rate $\frac{di}{dt}$ of the measured instantaneous value $I_{meas}$ of alternating current is equal or greater than a set threshold value of the change rate $\frac{di}{dt}\ limit$,

- the calculated second derivative $\frac{d^2 i}{dt^2}$ of the measured instantaneous value $I_{meas}$ of alternating current $I_{meas}$ is equal or greater than a set threshold value of the second derivative $\frac{d^2 i}{dt^2}\ limit$.

7. The method according to claim 6, **characterized in that**, it comprises further the following steps:

- notifying (204) the control module (30) for controlling operation of the contactless power supply device (10) of a foreign object detection, and/or
- switching off (205A) the contactless power supply device (10), or
- frequency modulation (205B) of a high frequency waveform generated by the high frequency generator (11).

8. The method according to claim 6 or 7, **characterized in that**, after the step of measuring (201A, 201C, 201D, 201E) instantaneous values $I_{meas}$ of alternating current of the primary coil (13) it comprises the step of filtering (206) of the measured instantaneous values $I_{meas}$ of alternating current.

9. A computer program comprising means of the program code for performing all steps of a computer-implemented method according to any of claims 6-8, when the said program is running on a computer.

10. A computer-readable medium storing computer-implemented instructions for performing all the steps of method according to any of claims 6-8 implement-

ed on a computer.

Fig. 1

**Fig. 2**

<u>201A</u>

<u>201B</u>

Measuring of
instantaneous values I$_{meas}$
of alternating current

OR

<u>201C</u>

Measuring of
the RMS values
of alternating current

OR

<u>201C'</u>

Measuring of
instantaneous values I$_{meas}$
of alternating current

Calculating of
the RMS value I$_{RMS}$
of the measured
instantaneous values I$_{meas}$
of alternating current

<u>201D</u>

OR

<u>201D'</u>

Measuring of
instantaneous values I$_{meas}$
of alternating current

Calculating of
the change rate di/dt
of the measured
instantaneous values I$_{meas}$
of alternating current

<u>201E</u>

OR

<u>201E'</u>

Measuring of
instantaneous values
of alternating current
I$_{meas}$

Calculating of
the second derivative $\frac{d^2i}{dt^2}$
of the measured
instantaneous values I$_{meas}$
of alternating current

<u>206</u>

Filtering of the measured
instantaneous values I$_{meas}$
of alternating current

**Fig. 3**

<u>202A</u>

Comparing the measured
instantaneous
values I$_{meas}$ of
alternating current
with a set
threshold I$_{limit}$ of
alternating current

OR

<u>202B</u>

Comparing
the measured RMS values
and/or
calculated RMS values
I$_{RMS}$ of the measured
instantaneous values
I$_{meas}$ of alternating current
with a set threshold of
the RMS value I$_{RMS\ limit}$

OR

<u>202C</u>

Comparing
the calculated change rate
di/dt of the measured
instantaneous values
I$_{meas}$ of alternating
current with
a set threshold of
the change rate
di/dt $_{limit}$

OR

<u>202D</u>

Comparing
the calculated second
derivative $\frac{d^2i}{dt^2}$ of
the measured instantaneous
values I$_{meas}$ of alternating
current with a set threshold
of the second derivative
$\frac{d^2i}{dt^2}$ limit

<u>203</u>

Detecting a foreign object when:

- the instantaneous value I$_{meas}$
is $\geq$ than a set threshold I$_{limit}$
of alternating current, or

- the measured and /or
calculated RMS value I$_{RMS}$
is than $\geq$ a set threshold
of the RMS value I$_{RMS\ limit}$, or

- the calculated change rate
di/dt is $\geq$ than a set threshold
of the change rate di/dt $_{limit}$, or

- the calculated second derivative
$\frac{d^2i}{dt^2}$ is $\geq$ than a set threshold
of the second derivative $\frac{d^2i}{dt^2}$ limit

<u>204A</u>

<u>205</u>

203

205

Notifying
a control module
of a foreign object
detection

204A

Switching off
a HF generator

OR

204B

Frequency modulation
of a waveform
generated by
a HF generator

**Fig. 3**

**Fig. 4A**

**Fig. 4B**

**Fig. 4C**

**Fig. 4D**

Europäisches
Patentamt

European
Patent Office

Office européen
des brevets

# EUROPEAN SEARCH REPORT

Application Number

EP 21 20 1325

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 812 444 B1 (FIT [KR]) 26 December 2017 (2017-12-26) * abstract; figure 9 * * paragraph [0035] – paragraph [0036]; claim 1 * | 1,3-7,9, 10 | INV. H02J50/60 |
| X | US 2018/205255 A1 (IKEFUJI YOSHIHIRO [JP] ET AL) 19 July 2018 (2018-07-19) * abstract * * paragraphs [0169] – [0171]; figure 12 * | 1-10 | |
| X | US 2020/169123 A1 (MEHAS GUSTAVO JAMES [US] ET AL) 28 May 2020 (2020-05-28) * paragraph [0042]; figure 7 * | 1,3-6,9, 10 | |
| X | EP 3 457 525 A1 (KONINKLIJKE PHILIPS NV [NL]) 20 March 2019 (2019-03-20) * abstract; figure 2 * * paragraph [0144] * | 1,6 | |
| X | US 2020/021143 A1 (GONDA MARTIN [DE] ET AL) 16 January 2020 (2020-01-16) * paragraph [0061]; claim 35; figures 3,4 * | 1,6 | **TECHNICAL FIELDS SEARCHED (IPC)** H02J B60L |
| A | LU JIANGHUA ET AL: "Foreign Object Detection in Wireless Power Transfer Systems", IEEE TRANSACTIONS ON INDUSTRY APPLICATIONS, IEEE SERVICE CENTER, PISCATAWAY, NJ, US, vol. 58, no. 1, 5 February 2021 (2021-02-05), pages 1340-1354, XP011897896, ISSN: 0093-9994, DOI: 10.1109/TIA.2021.3057603 [retrieved on 2022-01-18] * abstract * * page 1342 * | 1-10 | |

The present search report has been drawn up for all claims

| Place of search | Date of completion of the search | Examiner |
|---|---|---|
| Munich | 25 March 2022 | Braccini, Roberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 164 090 A1

### ANNEX TO THE EUROPEAN SEARCH REPORT
### ON EUROPEAN PATENT APPLICATION NO.

EP 21 20 1325

25-03-2022

| Patent document cited in search report | | Publication date | Patent family member(s) | | Publication date |
|---|---|---|---|---|---|
| KR 101812444 | B1 | 26-12-2017 | NONE | | |
| US 2018205255 | A1 | 19-07-2018 | EP | 3322068 A1 | 16-05-2018 |
| | | | JP | 6845624 B2 | 17-03-2021 |
| | | | JP | 2017028984 A | 02-02-2017 |
| | | | JP | 2021083310 A | 27-05-2021 |
| | | | US | 2018205255 A1 | 19-07-2018 |
| US 2020169123 | A1 | 28-05-2020 | NONE | | |
| EP 3457525 | A1 | 20-03-2019 | CN | 111149278 A | 12-05-2020 |
| | | | EP | 3457525 A1 | 20-03-2019 |
| | | | EP | 3692619 A1 | 12-08-2020 |
| | | | JP | 2020534774 A | 26-11-2020 |
| | | | US | 2020280220 A1 | 03-09-2020 |
| | | | WO | 2019053194 A1 | 21-03-2019 |
| US 2020021143 | A1 | 16-01-2020 | CN | 110494321 A | 22-11-2019 |
| | | | CN | 110536810 A | 03-12-2019 |
| | | | DE | 102017214741 A1 | 16-08-2018 |
| | | | DE | 102017214747 A1 | 16-08-2018 |
| | | | EP | 3580086 A1 | 18-12-2019 |
| | | | JP | 2020506660 A | 27-02-2020 |
| | | | KR | 20190113822 A | 08-10-2019 |
| | | | RU | 2019127796 A | 10-03-2021 |
| | | | US | 2020014249 A1 | 09-01-2020 |
| | | | US | 2020021143 A1 | 16-01-2020 |
| | | | WO | 2018145986 A1 | 16-08-2018 |
| | | | WO | 2018145987 A1 | 16-08-2018 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130069441 A1
- US 20150365138 A1
- US 20120038317 A1
- WO 2012004092 A2
- US 20140015329 A1
- US 20140084857 A1
- US 20120313579 A1